# EUROPÄISCHE PATENTSCHRIFT

(11) **EP 2 562 486 B1**
(45) Veröffentlichungstag und Bekanntmachung des Hinweises auf die Patenterteilung: **06.04.2016**
(21) Anmeldenummer: 11178326.2
(22) Anmeldetag: 22.08.2011
(51) Int. Cl.: F24J 2/52

(54) **Adapter**
Adapter
Adaptateur

(43) Veröffentlichungstag der Anmeldung: 27.02.2013
(73) Patentinhaber: GREENoneTEC, 9300 St. Veit/Glan (AT)
(72) Erfinder: Hochreiter, Erwin, 8020 Klagenfurt (AT); Koschier, Günter, 9314 Launsdorf (AT)
(74) Vertreter: Becker, Thomas

(56) Entgegenhaltungen:
- EP-A2- 2 206 992
- DE-A1- 19 736 099
- DE-U1- 20 204 148
- DE-U1- 29 919 148

## Beschreibung

Die Erfindung betrifft einen flachen, quaderförmigen Solar-Wannenkollektor mit einer transparenten Abdeckung auf einer ersten Hauptseite, einem im Wesentlichen parallel zur Abdeckung verlaufenden Boden auf einer zweiten Hauptseite und einer die Abdeckung mit dem Boden verbindenden umlaufenden Wand, die im Übergangsbereich zum Boden eine Wölbung aufweist.

Ein solcher Wannenkollektor ist aus der DE 19736099A1 bekannt. Der bekannte Wannenkollektor ist aus Pressholz hergestellt und. Gewindeeinsätze in der Kollektorwand dienen zur Fixierung der Lage des Kollektors auf Blechschuhen.

Erste und zweite Hauptseite beschreiben die im Montagezustand der Sonne zugewandte und die der Sonne abgewandte Kollektorfläche. Die Erfindung betrifft auch einen Adapter für den Solar-Wannenkollektor, zur Befestigung des Kollektors an eine Linearschiene mit einer im Wesentlichen planaren Auflagefläche für den Solar-Kollektor.

Solar-Kollektoren sind seit langem bekannt. Sie dienen dazu, Sonnenenergie zum Aufheizen eines Fluids zu nutzen.

Die am meisten verbreiteten Solar-Kollektoren weisen die Form eines flachen Quaders auf. Hierzu gehören die Kollektoren gemäß DE 29919148 U1, DE 20204148 U1 und DE 19736099 A1.

Dabei werden so genannte Rahmenkollektoren gemäß DE 29919148 U1 mit rechtwinklig zueinander verlaufenden Wänden von so genannten Wannenkollektoren gemäß DE 19736099 A1 unterschieden.

Bei der Erfindung geht es um die letztgenannte Gruppe. Der Solar-Wannenkollektor besteht aus einer flachen quaderförmigen Wanne. Die Wanne bildet den Boden des Kollektors und dessen umlaufende Wand, wobei der Übergangsbereich zwischen Wand und Boden - herstellungsbedingt - gewölbt ist. Die Wanne dient zur Aufnahme eines Absorbers, der im Wesentlichen aus einem Absorberblech und einem oder mehreren Registerrohren beziehungsweise Sammelrohren sowie entsprechenden Anschlusselementen besteht. Die Wanne wird auf ihrer offenen Seite, dem Boden gegenüberliegend, von einer transparenten Abdeckung begrenzt.

Die Montage eines solchen Solar-Kollektors und insbesondere die Montage mehrerer solcher Solar-Kollektoren nebeneinander zu einem Kollektor-Feld erfordert entsprechende Montagemittel. Üblicherweise sind dies lineare (gerade) Schienen, nachstehend Linearschienen genannt, die ein entsprechendes Profil aufweisen, um die Solar-Kollektoren darauf kraft- und/ oder formschlüssig montieren zu können.

Ein Problem bei der Montage eines Wannenkollektors auf einer Linearschiene sind die unterschiedlichen Geometrien von Kollektor und Linearschiene, insbesondere die Wölbung der Kollektor-Wanne im Verhältnis zu der im Wesentlichen planaren Auflage- und Montagefläche der Linearschiene.

Dieses Problem löst die Erfindung mit einem Adapter zwischen Kollektor und Schiene, der entsprechend so gestaltet ist, dass er an mindestens einer Stelle am Kollektor befestigt werden kann und an mindestens einer weiteren Stelle eine kraftschlüssige Verbindung mit der Linearschiene erlaubt. Der Adapter übernimmt also eine Art Brückenfunktion zwischen Solar-Kollektor und Linearschiene.

Der Solar-Kollektor kann integral mit dem Adapter gestaltet sein. Zum Beispiel kann der Adapter bei der Herstellung des Kollektors direkt mit ausgebildet werden. In der Regel wird es jedoch einfacher sein, den Adapter als eigenes Bauteil mit dem Kollektor zu verbinden. Beispiele dazu werden nachstehend angegeben.

Im Ergebnis steht dann ein Kollektor zur Verfügung, der mit Hilfe eines oder mehrerer Adapter, die am Kollektor befestigt sind, direkt auf einer Linearschiene montiert und entlang der Linearschiene verschoben werden kann.

Dabei erfolgt die geometrische Anpassung so, dass ein gewölbter Abschnitt einer korrespondierenden Kollektorwanne darin weitestgehend formschlüssig aufgenommen wird und der Adapter einen weiteren Abschnitt aufweist, der der Geometrie der Linearschiene angepasst ist, um eine entsprechende Auflage und Verbindung zwischen Kollektor und Linearschiene zu schaffen.

In ihrer allgemeinsten Ausführungsform umfasst die Erfindung einen Solar-Wannenkollektor gemäß Anspruch 1 und einen zugehörigen Adapter gemäß Anspruch 6.

Vorzugsweise ist der am Solarkollektor ausgebildete Adapter so geformt, dass der Solarkollektor entlang der Linearschiene axial verschoben werden kann. Das ist für die Montage und Ausrichtung von mehreren Kollektoren zueinander wichtig. Die Linearschiene kann dazu eine in Längsrichtung/Axialrichtung verlaufende Nut aufweisen und der Adapter eine korrespondierende Nase oder einen korrespondierenden Steg zur Führung entlang der Nut. Sind Steg und/oder Nase gekrümmt oder abgewinkelt lässt sich der Solar-Kollektor über eine korrespondierende Kurvenbahn in die Nut form- und/oder kraftschlüssig einsetzen und anschließend, bei Bedarf, entlang der Linearschiene verschieben.

Ganz allgemein kann der Adapter Mittel zur kraftschlüssigen Verbindung mit der Linearschiene aus der Gruppe: Stift, Schlitz, Nut, Feder, Schiene, Haken umfassen. Die Linearschiene wird dann korrespondierend gestaltet. Wie nachstehend noch erläutert wird können positive (männliche, male) und negative (weibliche, female) Verbindungselemente entweder am Adapter oder an der Schiene verlaufen.

Der Adapter kann im Bereich der Wölbung angeordnet sein. Vorzugsweise ist der Adapter nahe der umlaufenden Wand angeordnet.

Nach einer Ausführungsform ist der Adapter um maximal ein 2-faches der Breite der planaren Oberfläche der Linearschiene von einer virtuellen Schnittlinie zwischen Wand und Boden des Solar-Kollektors versetzt angeordnet. Die Breite der Linearschiene ist die Breite senkrecht zur Axialrichtung im Bereich der Oberfläche der Linearschiene, auf die der Solarkollektor aufgesetzt wird. Der Adapter kann auch um maximal eine Breite versetzt am Adapter verlaufen.

Neben der bereits erwähnten integralen (einteiligen) Ausbildung von Solarkollektor mit Adapter ist alternativ die Befestigung des Adapter am Kollektor mit mindestens einem der folgenden Mittel vorteilhaft: Schrauben, Nieten, Schweißverbindung, Steckverbinder, Klebeverbindung, Clinchverbindung

Der Begriff "formschlüssig" ist technisch zu verstehen, um eine weitestgehend flächige Verbindung zu erreichen.

Vor dem Hintergrund der vorstehend genannten geometrischen Vorgaben ergibt sich im einfachsten Fall ein Adapter, der im Querschnitt wie folgt aufgebaut ist:
- Ein in der Montageposition oberer Abschnitt weist eine freie gewölbte Außenfläche auf, während
- ein mit Abstand dazu verlaufender unterer Abschnitt weitestgehend planar ist beziehungsweise so gestaltet, dass er auf der planaren Auflagefläche der Linearschiene form- und/oder kraftschlüssig montiert werden kann.

Anders ausgedrückt: der erste Abschnitt des Adapters schafft eine Montagemöglichkeit zur Kollektorwanne, der zweite Abschnitt des Adapters dient der Montage an der Linearschiene. Dabei erfolgt die Montage jeweils form- und/oder kraftschlüssig. Eine form- und/oder kraftschlüssige Montage ist wichtig, damit der Solar-Kollektor nach der Montage sicher montiert (befestigt) ist, um auch bei Schneelast, Windangriff oder dergleichen seine definierte Position zu behalten.

Je nach Wölbung des Übergangsbereiches der Kollektorwanne wird die Geometrie des ersten Abschnittes des Adapters gewählt. Sie kann nach einer Ausführungsform so sein, dass Endabschnitte der freien Außenfläche des ersten Abschnitts planar sind. Dabei kann ein planarer Endabschnitt der Außenfläche des ersten Abschnitts im Wesentlichen parallel zur planaren Außenfläche des zweiten Abschnitts verlaufen.

Der Adapter kann als Hohlprofil gestaltet sein, wobei freie Außenflächen des ersten und zweiten Abschnittes Wandflächen dieses Hohlprofils sind.

Der Adapter muss selbstverständlich über entsprechende Verbinder an die zugehörigen Bauteile (Kollektor, Schiene) angeschlossen werden. Als Mittel zur Befestigung des Adapters am Solar-Kollektor werden unter anderem vorgeschlagen: Schrauben, Nieten, Schweißverbindung, Steckverbinder, Klebeverbindung.

Mittel zur Befestigung des Adapters an der Linearschiene sind beispielsweise: Stifte, Schlitze, Nuten, Federn, Schienen, Haken.

Die Befestigung des Adapters am Kollektor ist vorzugsweise so, dass beide eine vorkonfektionierte Baueinheit bilden, so dass der Monteur bei der Montage des Kollektors zum Beispiel auf einem Dach kein zusätzliches Werkzeug zur Befestigung des Adapters am Kollektor benötigt.

Demgegenüber ist die Verbindung zwischen Adapter und Schiene, die üblicherweise erst bei der Endmontage an der Baustelle erfolgt, bevorzugt so, dass ebenfalls eine Montage ohne Werkzeug möglich wird, beispielsweise durch Nut-/Federverbindungen, Rastmittel mit Hinterschnitt, Stift-/ Schlitzverbindungen oder dergleichen.

Dazu sieht eine Ausführungsform der Erfindung vor, den Adapter mit einer nach außen offenen Nut zur kraftschlüssigen Aufnahme korrespondierender Rastmittel der Linearschiene auszubilden, wobei die Rastmittel die Form diskreter Haken oder die Form einer Leiste haben können. Die Nut zum offenen Ende hin weist dazu beispielsweise einen Abschnitt auf, dessen Breite geringer ist als in einem, dem Nutgrund benachbarten Abschnitt.

Das folgende Ausführungsbeispiel zeigt die vorgenannten Ausführungsformen im Detail.

Um eine sichere Montage zu erreichen ist es vorteilhaft, mehrere Adapter entlang eines Wandabschnitts eines Solar-Kollektors vorzusehen, beispielsweise zwei im Abstand zueinander, so wie dies auch im Ausführungsbeispiel gezeigt wird.

Der Adapter besteht im einfachsten Fall aus dem gleichen Werkstoff wie der Kollektor und/oder die Schiene, beispielsweise aus Aluminium und/oder Kunststoff. In beiden Fällen lassen sich die Adapter beispielsweise als Stranggussteile einfach und preiswert herstellen. Durch die Verwendung gleicher Materialien wird das Risiko thermischer Spannungen zum Beispiel bei einer Verklebung von Adapter und Kollektor verringert, weil alle Bauteile gleiche thermische Ausdehnungskoeffizienten aufweisen.

Die Erfindung wird nachstehend anhand verschiedener Ausführungsbeispieles näher erläutert. Dabei zeigen - jeweils in schematisierter Darstellung - :
- Figur 1:: einen Querschnitt durch einen erfindungsgemäßen Adapter
- Figur 2:: einen Querschnitt durch einen Teil eines erfindungsgemäßen Solar-Kollektors mit einem Adapter gemäß Fig. 1 und zugehöriger Montageschiene (Linearschiene)
- Figur 3:: eine perspektivische Ansicht des Solar-Kollektors gemäß Figur 2 im Eingriff mit einer Linearschiene gemäß Figur 2.

In den Figuren sind gleiche oder gleich wirkende Bauteile mit gleichen Bezugsziffern dargestellt.

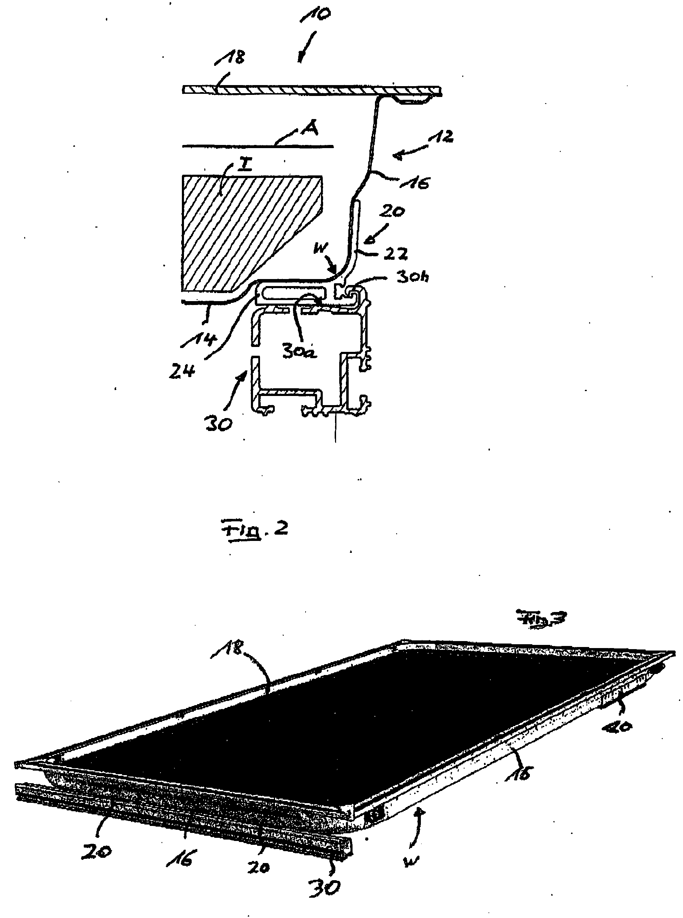

Der in Figur 2 dargestellte Solar-Kollektor trägt insgesamt das Bezugszeichen 10 und besteht aus einer Aluminium-Wanne 12 mit einem Boden 14 und einer aus vier Abschnitten bestehenden umlaufenden Wand 16, wobei in Figur 2 nur ein Wandabschnitt 16 zu erkennen ist.

Im Übergangsbereich zwischen der umlaufenden Wand 16 und dem Boden 14 besitzt die Wanne 12 eine Wölbung W, und zwar, vom Inneren der Wanne 12 aus betrachtet, eine konvexe Wölbung W.

Innerhalb der Wanne 12 befinden sich (nicht dargestellte) Registerrohre sowie ein zugehöriges Absorberblech A. Die Wanne 12 wird von einer transparenten Abdeckung 18 nach oben hin (nach der Montage der Sonne zugewandt) begrenzt. Mit I ist eine Mineralwolle-Isolierung zwischen Absorberblech A/Registerrohren und Boden 14 dargestellt.

Der Adapter trägt insgesamt das Bezugszeichen 20 und besteht aus einem ersten Abschnitt 22 mit einer freien Innenfläche 22a, die eine Wölbung 22w aufweist.

Form und Ausrichtung dieser Wölbung 22w sind so, dass die freie Innenfläche 22a des ersten Abschnitts 22 im montierten Zustand des Adapters 20 die Wölbung W der Wand 16 der Wanne 12 formschlüssig aufnimmt (Figuren 2, 3).

Der Adapter 20 weist weiters einen zweiten Abschnitt 24 auf, der gekennzeichnet ist durch eine freie, im Wesentlichen planare Außenfläche 24a, wobei die Ausrichtung dieser planaren Außenfläche 24a im montierten Zustand des Adapters 20 (Figuren 2, 3) im Wesentlichen parallel zum Boden 14 des Solar-Kollektors 10 ist.

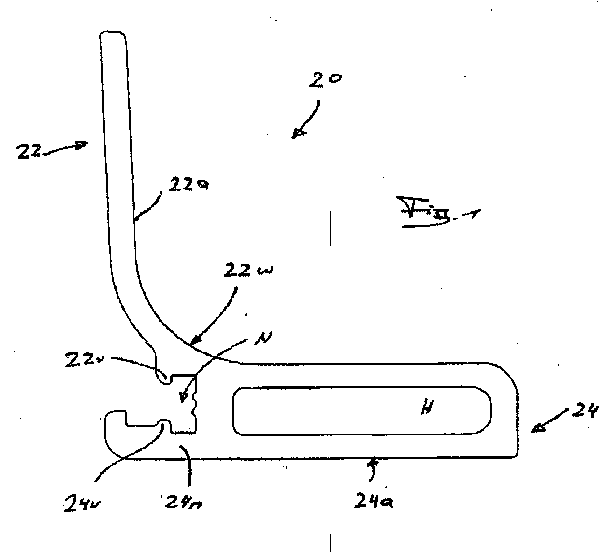

Figur 1 ist zu entnehmen, dass der Adapter 20 als Strangpressprofil hergestellt ist, also ein Hohlprofil bildet, wobei die Flächen 22a, 22w, 24a gegenüberliegende Umfangsflächen dieses Hohlprofils sind, dessen Hohlraum mit H gekennzeichnet ist.

In Figur 1 links dieses Hohlraums H ist die Außenfläche 24a nach links verlängert, so dass der zweite Abschnitt 24 dort eine L-formige Nase 24n bildet, die gleichzeitig eine nach außen offene Nut N begrenzet, die zwischen den Abschnitten 22, 24 ausgebildet ist. Im Bereich des offenen Endes (in Figur 1: links) ist die Nut N mit verjüngtem Querschnitt ausgebildet, was durch korrespondierende Vorsprünge 22v, 24v von den entsprechenden Abschnitten 22, 24 konstruktiv vorgegeben wird.

Dabei dient der nasenförmige Abschnitt 24n, der L-förmig gestaltet ist, der Aufnahme eines korrespondierenden Hakens 30h einer korrespondierenden Linearschiene 30, die als Hohlprofil gestaltet ist und eine im Wesentlichen planare Auflagefläche 30a aufweist, um die ebenfalls planare Außenfläche 24a des Adapters 20 im Montagezustand aufzunehmen (Figuren 2a, 3).

Sofern erfingdungsgemäß von "im Wesentlichen planar" gesprochen wird, so ist darunter die generelle Ausrichtung der entsprechenden Flächenabschnitte zu verstehen, was nicht ausschließt, wie auch in Figur 2 dargestellt, dass die entsprechende planare Fläche 20a mit Vor- und Rücksprüngen ausgebildet ist, die beispielsweise der Versteifung des entsprechenden Profils dienen, wobei die Vor- und/oder Rücksprünge so ausgeführt sind, dass sie insgesamt eine planare Ausrichtung des zugehörigen Adapters 20 mit der entsprechenden Auflagefläche 24a erlauben.

Der Adapter 20 ist im dargestellten Ausführungsbeispiel auf den entsprechenden Wandabschnitt 16 beziehungsweise Boden 12 der Wanne 20 geklebt und gegenüber der Linearschiene 30 verrastet (Nase 24n, Haken 30h).

Die Wanne 12, der Adapter 20 und die Linearschiene 30 bestehen aus Aluminium.

Wie insbesondere die Figuren 2, 3 zeigen, sind zwei Adapter 20 entlang einer der vier Wandabschnitte des Kollektors im Abstand zueinander angeordnet, wobei Figur 3 ein Ausführungsbeispiel zeigt, bei dem die Adapter an der Wanne 20 verschraubt sind.

## Patentansprüche

1. Flacher quaderförmiger Solar-Wannenkollektor mit einer transparenten Abdeckung (18) auf einer ersten Hauptseite, einem im Wesentlichen parallel zur Abdeckung (18) verlaufenden Boden (14) auf einer zweiten Hauptseite und einer die Abdeckung (18) mit dem Boden (14) verbindenden umlaufenden Wand (16), die im Übergangsbereich zum Boden (14) eine Wölbung (W) aufweist, **dadurch gekennzeichnet, dass** an der Wand (16) oder am Boden (14) oder an der Wand (16) und am Boden (14) mindestens ein Adapter (20) zum kraftschlüssigen Eingriff in eine als Montageschiene für den Solarkollektor dienenden Linearschiene (30) mit einer im Wesentlichen planaren Oberfläche (30a) ausgebildet ist, und am Adapter (20) Mittel zur kraftschlüssigen Befestigung des Adapters (20) am Solar-Kollektor (10) vorgesehen sind, wobei
a) der Adapter (20) einen ersten Abschnitt (22) mit einer freien Außenfläche (22a) mit einer Wölbung (22w) aufweist, wobei
b) die Form und Ausrichtung dieser Wölbung (22w) so ist, dass die freie Außenfläche (22a) des ersten Abschnitts (22) im montierten Zustand des Adapters (20) die Wölbung (W) der Wand (16) der Wanne (12) formschlüssig aufnimmt, und
c) einen zweiten Abschnitt (24) mit einer freien, im Wesentlichen planaren Außenfläche (24a), wobei
d) die Ausrichtung dieser planaren Außenfläche (24a) im montierten Zustand des Adapters (20) im Wesentlichen parallel zum Boden (14) des Solar-Kollektors (10) ist.

2. Solar-Wannenkollektor nach Anspruch 1, bei dem der Adapter (10) so ausgebildet ist, dass der Solarkollektor axial entlang der Linearschiene (30) verschiebbar ist.

3. Solar-Wannenkollektor nach Anspruch 1, bei dem der Adapter (20) um maximal ein 2-faches der Breite der planaren Oberfläche (30a) der Linearschiene (30) von einer virtuellen Schnittlinie (S) zwischen Wand (16) und Boden (14) des Solar-Kollektors versetzt angeordnet ist.

4. Solar-Waztnenkollektor nach Anspruch 1, bei dem der Adapter mit mindestens einem der folgenden Mittel am Solar-Kollektor befestigt ist: Schrauben, Nieten, Schweißverbindung, Steckverbinder, Klebeverbindung, Clinchverbindung

5. Solar-Wannenkollektor nach Anspruch 1, wobei der Adapter (10) Mittel zum kraftschlüssigen Eingriff in die Linearschiene (30) aus der Gruppe: Stift, Schlitz, Nut, Feder, Schiene, Haken umfasst.

6. Adapter zum Anschluss eines flachen, quaderförmigen Solar-Wannenkollektors (10) nach Anspruch 1 an eine Linearschiene (30) mit einer im Wesentlichen planaren Oberfläche (30a) als Auflagefläche für den Solar-Kollektor (10), wobei
a) am Adapter (20) Mittel zur kraftschlüssigen Befestigung des Adapters (20) am Solar-Kollektor (10) und an der Linearschiene (30) vorgesehen sind und der Adapter (20)
b1) einen ersten Abschnitt (22) mit einer freien Außenfläche (22a) mit einer Wölbung (22w) aufweist, wobei
b2) die Form und Ausrichtung dieser Wölbung (22w) so ist, dass die freie Außenfläche (22a) des ersten Abschnitts (22) im montierten Zustand des Adapters (20) die Wölbung (W) der Wand (16) der Wanne (12) formschlüssig aufnimmt, und
c1) einen zweiten Abschnitt (24) mit einer freien, im Wesentlichen planaren Außenfläche (24a), wobei
c2) die Ausrichtung dieser planaren Außenfläche (24a) im montierten Zustand des Adapters (20) im Wesentlichen parallel zum Boden (14) des Solar-Kollektors (10) ist.

7. Adapter nach Anspruch 6, bei dem Endabschnitte der freien Außenfläche (22a) des ersten Abschnitts (22) planar sind.

8. Adapter nach Anspruch 7, bei dem ein planarer Endabschnitt der Außenfläche (22a) des ersten Abschnitts (22) im Wesentlichen parallel zur planaren Außenfläche (24a) des zweiten Abschnitts (24) verläuft.

9. Adapter nach Anspruch 6, bei dem die freien Außenflächen (22a) des ersten Abschnitts (22) und des zweiten Abschnitts (24) Wandflächen eines Hohlprofils sind.

10. Adapter nach Anspruch 6, mit einer nach außen offenen Nut (N) zur kraftschlüssigen Aufnahme korrespondierender Rastmittel der Linearschiene (30).

11. Adapter nach Anspruch 10, wobei die Rastmittel die Form diskreter Haken oder die Form einer Leiste haben.

12. Adapter nach Anspruch 11, wobei die Nut (N) zum offenen Ende hin einen Abschnitt aufweist, dessen Breite geringer als in einem, dem Nutgrund benachbarten Abschnitt.

## Claims

1. A flat, box-shaped solar tray-collector with a translucent cover (18) at a first main side, a bottom (14), which predominantly extends parallel to said cover (18) at a second main side and a circumferentially extending wall (16), connecting the cover (18) with said bottom (14), which wall has a concavity (W) at a transition region to said bottom (14), **characterized in that** at least one adapter is arranged at the wall (16) or at the bottom (14) or at the wall (16) and at the bottom (14), which can be force-fitted with a linear rail (30), which serves as a mounting rail for the solar collector and which has a substantially planar surface (30a), while there are means at said adapter (20) to achieve a force fitted fixation of said adapter (20) to said solar-collector (10), wherein
a) the adapter (20) features a first section (22) with a free outer surface (22a) with a curvature (22w), wherein
b) the shape and orientation of said curvature (22w) is such that in a mounted position the free outer surface (22a) of the first section (22) houses the concavity (W) of the wall (16) of the tray in a form-fit manner, and
c) a second section (24) with a free, predominantly planar outer surface (24a), wherein
d) the orientation of this planar outer surface (24a) is predominantly parallel to the bottom of the solar collector (10) when the adapter (20) takes its mounted position,

2. The solar tray-collector according to claim 1, wherein the adapter is designed such that the solar collector can slide axially along said linear rail (30).

3. The solar tray-collector according to claim 1, wherein the adapter (20) is arranged at a distance to a virtual intersection (S) between wall (16) and bottom (14) of the solar collector which corresponds at most twice the width of the planar surface (30a) of the linear rail (30).

4. The solar tray-collector according to claim 1, wherein the adapter is fixed by at least one of the following means to said solar-collector: screws, rivets, welding connection, plug connector, adhesive bond, cinch connector.

5. The solar tray-collector according to claim 1, wherein the adapter comprises means to achieve a force-fitted connection into said linear rail (20) of the group: pin, slit, groove, tongue, rail, hook.

6. An adapter for connecting a flat, box-shaped solar tray-collector (10) according to claim 1 to a linear rail (30) with a substantially planar outer surface (30a) as a bearing surface for said solar-collector, with
a) means at said adapter (20) to achieve a force-fitted fixation of said adapter (20) to said solar-collector (10) and to said linear rail (30) and wherein said adapter comprises
b1) a first section (22) with a free outer surface (22a) with a curvature (22w), wherein
b2) the shape and orientation of said curvature (22w) is such that in a mounted position the free outer surface (22a) of the first section (22) houses the concavity (W) of the wall (16) of the tray in a form-fit manner, and
c1) a second section (24) with a free, predominantly planar outer surface (24a), wherein
c2) the orientation of this planar outer surface (24a) is predominantly parallel to the bottom of the solar collector (10) when the adapter (20) takes its mounted position,

7. The adapter according to claim 6, with end sections of the free outer surface (22a) of the first section (22) being planar.

8. The adapter according to claim 7, wherein the planar end sections of the outer surface (22a) of the first section (22) extends predominantly parallel to the planar outer surface (24a) of the second section (24).

9. The adapter according to claim 6, wherein the free outer surfaces (22a) of the first section (22) and of the second section (24) are wall surfaces of a hollow profile.

10. The adapter according to claim 6 with a groove (N) open to the outside, for a force-fitted housing of corresponding latching means of the linear rail (30).

11. The adapter according to claim 10, wherein the latching means have the shape of hooks or the shape of a strip.

12. The adapter according to claim 11, wherein the groove (N) features a section towards its open end, the width of which being smaller than at a section adjacent to the bottom of said groove.

## Revendications

1. Collecteur solaire plat, parallélépipédique, en forme de bac avec une couverture transparente (18) sur une première face principale, un fond (14) s'étendant sensiblement parallèlement à la couverture (18) sur une deuxième face principale, et une paroi périphérique (16) reliant la couverture (18) au fond (14), laquelle paroi présente un bombage (W) dans la zone de transition vers le fond (14),
**caractérisé en ce que**, sur la paroi (16) ou sur le fond (14) ou sur la paroi (16) et le fond (14), au moins un adaptateur (20) est formé pour la mise en prise par force dans un rail linéaire (30) avec une surface (30a) sensiblement plane servant de rail de montage pour le collecteur solaire, et des moyens étant prévus sur l'adaptateur (20) pour la fixation par force de l'adaptateur (20) sur le collecteur solaire (10), dans lequel
a) l'adaptateur (20) présente une première partie (22) avec une surface extérieure libre (22a) avec un bombage (22w), dans lequel
b) la forme et l'orientation de ce bombage (22w) sont telles, que la surface extérieure libre (22a) de la première partie (22), à l'état monté de l'adaptateur (20), réceptionne par conjugaison de formes le bombage (W) de la paroi (16) du bac (12), et
c) une deuxième partie (24) avec une surface extérieure libre (24a) sensiblement plane, dans lequel
d) l'orientation de cette surface extérieure plane (24a), à l'état monté de l'adaptateur (20), est sensiblement parallèle au fond (14) du collecteur solaire (10).

2. Collecteur solaire en forme de bac selon la revendication 1, dans lequel l'adaptateur (10) est réalisé de manière à ce que le collecteur solaire puisse coulisser axialement le long du rail linéaire (30).

3. Collecteur solaire en forme de bac selon la revendication 1, dans lequel l'adaptateur (20) est disposé de manière décalée d'un maximum de 2 fois la largeur de la surface plane (30a) du rail linéaire (30) par rapport à une ligne d'intersection virtuelle (S) entre la paroi (16) et le fond (14) du collecteur solaire.

4. Collecteur solaire en forme de bac selon la revendication 1, dans lequel l'adaptateur est fixé sur le collecteur solaire avec au moins l'un des moyens suivants: des vis, des rivets, une liaison par soudage, un connecteur enfichable, une liaison par collage, une liaison par agrafage.

5. Collecteur solaire en forme de bac selon la revendication 1, dans lequel d'adaptateur (20) comprend des moyens pour la mise en prise par force dans le rail linéaire (30) parmi le groupe formé par : une tige, une fente, une rainure, un ressort, un rail, un crochet.

6. Adaptateur pour le raccordement d'un collecteur solaire plat, parallélépipédique, en forme de bac (10) selon la revendication 1, à un rail linéaire (30) avec une surface (30a) sensiblement plane en tant que surface d'appui pour le collecteur solaire (10), dans lequel
a) on prévoit sur l'adaptateur (20) des moyens pour la fixation par force de l'adaptateur (20) sur le collecteur solaire (10) et sur le rail linéaire (30), et en ce que l'adaptateur (20)
b1) présente une première partie (22) avec une surface extérieure libre (22a) avec un bombage (22w), dans lequel
b2) la forme et l'orientation de ce bombage (22w) sont telles, que la surface extérieure libre (22a) de la première partie (22), à l'état monté de l'adaptateur (20), réceptionne par conjugaison de formes le bombage (W) de la paroi (16) du bac (12), et
c1) une deuxième partie (24) avec une surface extérieure libre (24a) sensiblement plane, dans lequel
c2) l'orientation de cette surface extérieure plane (24a), à l'état monté de l'adaptateur (20), est sensiblement parallèle au fond (14) du collecteur solaire (10).

7. Adaptateur selon la revendication 6, dans lequel des parties d'extrémité de la surface extérieure libre (22a) de la première partie (22) sont planes.

8. Adaptateur selon la revendication 7, dans lequel une partie d'extrémité plane de la surface extérieure (22a) de la première partie (22) s'étend sensiblement parallèlement à la surface extérieure plane (24a) de la deuxième partie (24).

9. Adaptateur selon la revendication 6, dans lequel les surfaces extérieures libres (22a) de la première partie (22) et de la deuxième partie (24) sont des surfaces de paroi d'un profil creux.

10. Adaptateur selon la revendication 6, avec une rainure (N) ouverte vers l'extérieur pour la réception par force de moyens d'encliquetage correspondants du rail linéaire (30).

11. Adaptateur selon la revendication 10, dans lequel les moyens d'encliquetage ont la forme de crochets discrets ou la forme d'une baguette.

12. Adaptateur selon la revendication 11, dans lequel la rainure (N) présente une partie vers l'extrémité ouverte dont la largeur est inférieure à celle dans une partie voisine du fond de la rainure.
